# FASCICULE DE BREVET EUROPEEN

(11) **EP 3 736 790 B1**
(45) Date de publication et mention de la délivrance du brevet: **27.08.2025**
(21) Numéro de dépôt: 19201716.8
(22) Date de dépôt: 07.10.2019
(51) Int. Cl.: G09B 19/00

(54) **SYSTÈME ET PROCÉDÉ POUR L'ANALYSE DU MOUVEMENT LORS D'UN TIR SPORTIF**
SYSTEM UND VERFAHREN ZUR BEWEGUNGSANALYSE WÄHREND EINES SPORTSCHIESSENS
SYSTEM AND METHOD FOR ANALYSING MOVEMENT DURING TARGET SHOOTING

(30) Priorité: 07.05.2019 FR 1904749
(43) Date de publication de la demande: 11.11.2020
(73) Titulaire: Dupont, Guillaume, 33600 Pessac (FR)
(72) Inventeur: Dupont, Guillaume, 33600 Pessac (FR)
(74) Mandataire: Ipside

(56) Documents cités:
- WO-A1-2008/049151
- WO-A1-97/25583
- US-A1- 2008 214 360
- US-A1- 2011 230 274
- US-A1- 2017 110 026

## Description

### DOMAINE TECHNIQUE

La présente invention appartient au domaine général du tir sportif, notamment des instruments et méthodes d'analyse du tir, et concerne plus particulièrement un système et un procédé pour l'analyse des mouvements du tireur et/ou de l'arme lors d'un tir afin d'améliorer les performances du tireur.

L'invention s'applique également à l'entrainement pour la chasse.

### ÉTAT DE L'ART

La pratique du tir, en particulier dans un cadre sportif, nécessite une grande maitrise technique quelle que soit la discipline visée (carabine, pistolet, arbalète, etc.). Cette maitrise technique réside essentiellement dans la précision d'exécution du tir. Désireux de se perfectionner, les tireurs n'ont de cesse de chercher des moyens pratiques et efficaces pour les guider dans leur entrainement.

Une solution triviale, adoptée quasi systématiquement par les tireurs, au moins pour une analyse préliminaire du tir, consiste à filmer les séquences de tirs et à analyser ensuite, sur la vidéo enregistrée, les mouvements du corps et de l'arme pour essayer de comprendre leur incidence sur la précision des tirs.

Les déductions qui découlent de cette analyse, purement qualitative, sont approximatives, et malgré le fait qu'elles permettent de déceler certaines irrégularités, les plus flagrantes, elles restent inappropriées en ce qui concernent les irrégularités les moins visibles.

L'analyse vidéo est donc une méthode qui peut servir aux tireurs débutants, commettant des erreurs facilement détectables, mais qui n'est pas adaptée aux tireurs les plus chevronnés et encore moins aux sportifs professionnels.

Généralement, l'amélioration de la précision pour un tireur de haut niveau repose sur des détails infimes de mouvement du corps et de l'arme difficilement perceptibles à l'œil nu ou par des moyens d'analyse des images du tir. Il est donc nécessaire de disposer de moyens d'analyse approfondie, de grande précision, pour observer l'influence des mouvements du corps sur la précision du tir.

Une solution connue repose sur l'utilisation d'un pointeur laser, positionné sur l'arme parallèlement à l'axe du canon, pour projeter sur la cible visée un point lumineux dont le mouvement est filmé, lors de la séquence du tir, puis analysé.

Cette solution permet par exemple de révéler des problèmes de stabilité qui se manifestent par des oscillations, plus ou moins amples, du point lumineux et qui peuvent être dues à des tremblements du tireur ou à un mauvais contrôle de la respiration, et ne permet cependant aucune analyse précise de corrélation entre le mouvement de l'arme et le mouvement du tireur.

Une autre solution connue repose sur l'utilisation d'un dispositif tel qu'un capteur optique également positionné sur l'arme, de préférence en bout de canon, pour analyser les mouvements de l'arme lors de la séquence de tir, grâce à un couplage avec un logiciel de traitement dédié.

Le document EP 160123 décrit une solution dans laquelle un dispositif optique de type caméra, fixé de manière amovible au canon d'une arme, est utilisé pour enregistrer des séquences de tirs qui seront ensuite diffusées sur un moyen d'affichage vidéo en vue de surveiller le mouvement de l'arme.

Ces solutions fournissent des résultats insatisfaisants pour plusieurs raisons : elles nécessitent l'ajout d'un instrument (pointeur laser, caméra ou dispositif d'analyse du mouvement) sur l'arme, lequel instrument présente un certain poids et perturbe l'équilibre de l'arme de façon notable, ce qui risque de fausser les analyses ; l'analyse du mouvement obtenue ne concerne qu'une partie restreinte de l'arme et ne peut pas être généralisée aux autres composantes de l'arme comme la crosse par exemple ; elles ne permettent pas d'expliquer la cause du mouvement de l'arme, à savoir le mouvement du tireur. Ce dernier inconvénient est particulièrement pénalisant car il ne permet pas au tireur d'analyser la corrélation entre le mouvement des parties de son corps et le mouvement de l'arme pour essayer de rectifier ses gestes.

### PRÉSENTATION DE L'INVENTION

La présente invention a pour but principal de pallier les limitations de l'art antérieur en proposant une méthode d'analyse du mouvement et un système de mise en œuvre, destinés à analyser les mouvements d'un tireur sportif, ou autre, afin d'établir une corrélation entre ses mouvements et les mouvements de son arme, présentant un encombrement et un poids réduits pour ne pas fausser la configuration du tir, ainsi qu'un très faible coût.

À cet effet, la présente invention concerne un procédé d'analyse du mouvement d'une personne et d'un dispositif tenu par ladite personne au moyen d'une pluralité de capteurs de mouvement fixés sur la personne et/ou sur le dispositif. Ce procédé est remarquable en ce qu'il comprend des étapes de : mesure de variables cinématiques instantanées par les capteurs de mouvement, transmission de données de mesure à au moins un boitier électronique d'interface relié à un ou plusieurs capteurs de mouvement, prétraitement des données transmises dans ledit boitier, transmission des données prétraitées à un calculateur central, traitement des données reçue par le calculateur central avec au moins un calcul de corrélation, affichage de résultats dudit traitement.

Selon un mode de réalisation, l'étape de prétraitement dans chaque boitier électronique d'interface comprend une normalisation des mesures, issues des capteurs de mouvements auxquels ledit boitier est relié, selon des unités physiques déterminées.

De façon avantageuse, l'étape de transmission des données prétraitées au calculateur central est effectuée par une liaison filaire ou sans-fil.

Plus particulièrement, l'étape de traitement des données dans le calculateur central comprend des calculs statistiques selon la loi du χ2.

Avantageusement, l'étape de traitement des données dans le calculateur central comprend un calcul de corrélation entre le mouvement d'au moins un capteur de mouvement fixé au dispositif et le mouvement d'au moins un capteur de mouvement porté par la personne.

Plus particulièrement, l'étape d'affichage de résultats du traitement réalisé dans le calculateur central consiste en l'affichage d'un ou plusieurs éléments parmi des graphiques, des courbes temporelles, des tableaux de données et des messages textuels.
Le document US2017/110026 décrit un système de mesure et d'analyse de mouvement, à nœuds multiples, qui comporte au moins un module de mesure de mouvement et une unité de récepteur. Le module de mesure de mouvement est relié à un équipement sportif tenu à la main au moyen d'une attache ajustable, ou est relié au corps humain. Le module de mesure de mouvement comporte un capteur de mouvement, de type unité de mesure inertielle IMU, pour mesurer des accélérations, des vitesses angulaires et des force magnétiques, un premier microprocesseur relié au capteur et utilisé pour générer des informations d'attitude, et un premier module radiofréquence pour recevoir les mesures et les envoyer à l'unité de récepteur. L'unité de récepteur génère des informations de mouvement en fonction des mesures d'accélération, de vitesse angulaire, de force magnétique et d'attitude, et calibre le module de mesure de mouvement lorsque celui-ci est relié à différents endroits sur le corps humain. Le nombre de modules de mesure de mouvement et leurs positions peuvent être choisis librement.

Selon un mode de réalisation préféré, la personne est un tireur sportif et le dispositif est une arme avec ou sans support de tir.

L'invention porte également sur un système d'analyse du mouvement pour la mise en œuvre du procédé présenté, comprenant des capteurs de mouvement, au moins un boitier électronique d'interface et un calculateur central.

Avantageusement, les capteurs de mouvement, le boitier électronique d'interface et le calculateur central sont respectivement des unités de mesure inertielles, une carte électronique programmable de type Arduino et un ordinateur.

Selon un mode de réalisation, chaque capteur de mouvement est fixé sur le dispositif et/ou sur la personne par des moyens repositionnables tels que des adhésifs, des bandes auto agrippantes ou des épingles.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif des modes de réalisations d'un procédé et d'un système d'analyse du mouvement conformes aux principes de l'invention.

### BRÈVE DESCRIPTION DES FIGURES

Les figures ainsi que les éléments d'une même figure ne sont pas nécessairement à la même échelle. Sur l'ensemble des figures, les éléments identiques portent la même référence numérique.

Il est ainsi illustré en :
- Figure 1 : un schéma d'un tireur à la carabine équipé d'un système d'analyse du mouvement selon l'invention ;
- Figure 2 : un schéma d'un tireur au pistolet équipé d'un système d'analyse du mouvement dont le calculateur est situé à proximité ;
- Figure 3 : un exemple de positionnement des capteurs de mouvement selon l'invention ;
- Figure 4a : un exemple d'analyse du mouvement pour un tir « raté » ;
- Figure 4b : un exemple d'analyse du mouvement pour un tir « réussi ».

### DESCRIPTION DÉTAILLÉE DE MODES DE RÉALISATION

La terminologie employée dans la présente description ne doit en aucun cas être interprétée de manière limitative ou restrictive. Elle est simplement employée en conjonction avec une description détaillée de certains modes de réalisation de l'invention.

Dans le mode de réalisation décrit ci-après, on fait référence à un système d'analyse du mouvement destiné principalement au tir sportif pour aider au perfectionnement des tireurs. Cet exemple, non limitatif, est donné pour une meilleure compréhension de l'invention et n'exclut pas l'application de l'invention à d'autres sports dans lesquels la précision et la maitrise du mouvement sont cruciales comme le golf, ou dans toute autre situation nécessitant une analyse du mouvement et plus spécifiquement une analyse de la corrélation entre les mouvements de deux ou plusieurs mobiles liés entre eux.

Dans la suite de la description, le terme « arme » renvoie uniquement aux outils ou dispositifs destinés à envoyer un projectile à distance par l'action d'une explosion (armes à feu telles qu'une carabine, un pistolet, etc.) ou par l'intermédiaire d'un mécanisme (armes à trait telles qu'un arc ou une arbalète), et le terme « tireur » désigne par extension toute personne en position de tir avec une arme dans le cadre d'une activité sportive ou ludique.

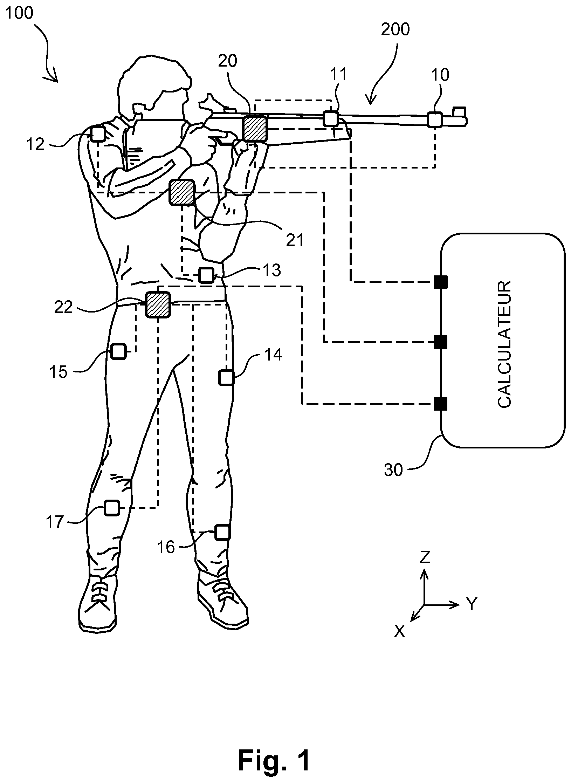

La figure 1 représente un tireur 100 sportif en position de tir avec une arme 200 de type carabine, tous deux équipés d'un système d'analyse du mouvement selon l'invention comprenant principalement une pluralité de capteurs de mouvement, référencés 10 à 17 sur cette figure, des boitiers d'interface 20, 21 et 22, auxquels sont reliés les capteurs de mouvement, et un calculateur 30 connecté aux boitiers d'interface.

Chaque capteur de mouvement 10 à 17 est un capteur inertiel sous forme d'une centrale inertielle miniature de type unité de mesure inertielle, connue par son acronyme anglosaxon IMU (pour *Inertial Measurement Unit*)*.* En effet, une unité de mesure inertielle est constituée d'une association de capteurs, dits proprioceptifs, mesurant directement les mouvements du mobile sur lequel ladite unité est fixée, de tels capteurs sont des accéléromètres et des gyromètres. Pour des raisons de miniaturisation, ces capteurs sont par exemple conçus selon la technologie des microsystèmes électromécaniques (MEMS). Grâce à cette technologie, les IMU de la présente invention sont disponibles à faible coût, commercialisées par la société *SparkFun* par exemple, et présentent des dimensions réduites et un faible poids, de l'ordre du centimètre carré et de quelques grammes respectivement, de sorte à pouvoir être positionnées sur le tireur et/ou sur l'arme sans encombre.

Chaque IMU comporte un accéléromètre, dit 3 axes mesurant les accélérations selon trois axes X, Y et Z, et un gyromètre, dit 3 axes mesurant les vitesses de rotations autour de ces mêmes axes, le système d'axes (X, Y, Z) représenté sur la figure 1 formant un repère inertiel de mesure. Les mesures des gyromètres ne sont affectées que par l'évolution de l'orientation par rapport au repère inertiel alors que les mesures des accéléromètres sont affectées par l'orientation, les vitesses de rotations ainsi que par la position et son évolution. Chaque IMU est muni d'un calculateur intégré sous forme de microprocesseur ou de microcontrôleur, de type 32 bits, opérant une intégration des vitesses angulaires pour obtenir les angles d'attitude (roulis, tangage et lacet), et des intégrations successives des accélérations pour obtenir les composantes du vecteur vitesse linéaire ainsi que la position.

Les IMU peuvent en outre comporter des magnétomètres 3 axes et des capteurs de pression barométrique.

Les IMU sont placées chacune sur une partie, de l'arme 200 ou du corps du tireur 100, dont la mobilité a une incidence avérée sur le déroulement des phases du tir, et par là-même sur la précision du tir.

Selon l'exemple de réalisation de la figure 1, le système d'analyse du mouvement comprend huit IMU 10 à 17 placées respectivement au niveau de l'extrémité du canon, du fût, de l'épaule d'appui de la crosse, du bassin, des cuisses gauche et droite, et des jambes gauche et droite.

Ainsi, les IMU mesurent les différentes variables cinématiques des parties précitées, lesdites variables étant ensuite compilées dans les boitiers d'interface 20, 21 et 22 auxquels les IMU sont reliées par groupes.

Chaque boitier d'interface comprend une carte électronique programmable sur laquelle des moyens de traitement et de calcul, sous forme de microcontrôleur ou de microprocesseur, sont disposés. Les boitiers d'interface comportent également un port d'interface de programmation, de type USB par exemple, une pluralité d'entrées/sorties, ainsi que tous les composants électroniques (mémoires informatiques, contrôle de l'alimentation, etc.) nécessaires au pilotage des moyens de calcul et de traitement.

De préférence, les boitiers d'interface 20, 21 et 22 sont des cartes Arduino. Chaque boitier d'interface peut être connecté à plusieurs IMU à la fois. Sur la figure 1 par exemple, les IMU 10 et 11, positionnées sur l'arme 200, sont connectées au boitier d'interface 20, les IMU 12 et 13, positionnées au niveau de la partie haute du corps du tireur 100, sont connectées au boitier d'interface 21, et les IMU 14 à 17, positionnées au niveau de la partie basse du corps du tireur 100, sont connectées au boitier d'interface 22. Avantageusement, cet agencement permet par exemple d'utiliser des liaisons filaires courtes entre les IMU et les boitiers d'interface.

Ainsi, chaque boitier d'interface permet de programmer, de régler, de calibrer et d'alimenter électriquement un ensemble d'IMU, de récupérer les données de mesure dudit ensemble, et d'effectuer, grâce à sa capacité de calcul, des prétraitements sur lesdites données avant leur transmission au calculateur 30. La programmation des IMU et les prétraitements de leurs données comprennent par exemple la définition de la résolution des données, la normalisation des données selon des unités physiques déterminées (comme exprimer les données brutes des accéléromètres en « g » avec g = 9,81 m/s²), etc.

Le calculateur 30 est relié aux boitiers d'interface 20 à 22 et permet de récupérer les données de toutes les IMU afin de les traiter. La récupération et le traitement des données des IMU par le calculateur 30 peuvent être effectués en temps réel ou en temps différé, auquel cas les données sont temporairement stockées avant leur traitement.

Le calculateur 30 se présente typiquement sous forme d'un ordinateur implémentant un système d'exploitation adapté.

La liaison entre les boitiers d'interface 20 à 22 et le calculateur 30 peut être filaire, par des fils électriques ou câbles adaptés, ou sans-fil, au moyen d'une communication radio par exemple. Dans ce dernier cas, les boitiers d'interfaces, qui peuvent êtres des cartes Arduino, sont pourvus de modules de communication sans-fil adaptés tels que des modules RF (radiofréquence). La liaison, filaire ou radio, permet ainsi au calculateur 30 de communiquer les instructions de programmation aux boitiers d'interface, en transférant les programmes à exécuter directement sur lesdits boitiers, et de récupérer en temps réel les données des IMU.

De plus, la liaison filaire entre les boitiers d'interface et le calculateur peut servir à alimenter ou à recharger électriquement lesdits boitiers. Les boitiers d'interface peuvent également présenter une alimentation autonome au moyen de batteries embarquées de type lithium ion par exemple.

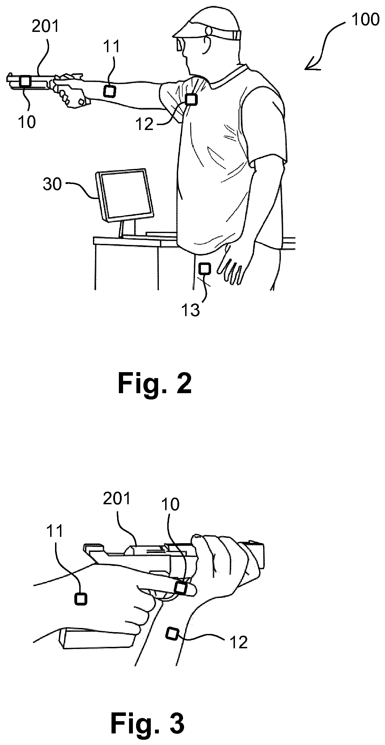

La figure 2 illustre un tireur 100 dont l'arme est un pistolet 201, le tireur et son pistolet sont équipés d'IMU 10 à 13 et d'au moins un boitier d'interface non représenté qui communique avec un ordinateur 30 situé à proximité du tireur. Le tireur peut donc suivre les résultats d'analyse du mouvement en temps réel pour essayer d'améliorer la précision de ses tirs.

Avantageusement, de par leurs dimensions, les IMU peuvent être placées sur les mains du tireur, et plus particulièrement sur une phalange du doigt avec lequel le tireur appuie sur la queue de détente de l'arme, comme représenté sur la figure 3. Cela permet par exemple d'analyser le maintien de stabilité de l'arme lors du lâcher.

Selon un aspect pratique de l'invention, les IMU peuvent être portées par le tireur en étant soit collées directement sur la peau du tireur soit fixées aux vêtements du tireur. Dans le premier cas, les IMU comprennent une face adhésive adaptée, à l'image des timbres transdermiques (ou patchs) utilisés en médecine, permettant leur collage sur la peau du tireur. Dans le deuxième cas, les IMU peuvent être fixées sur les vêtements par différents moyens tels que des bandes auto agrippantes (velcro), des épinglettes, etc.

Dans les deux cas, la fixation des IMU peut être repositionnable.

Par exemple, les IMU peuvent comporter une bande velcro mâle ou femelle et coopérer avec une bande complémentaire repositionnable collée sur les vêtements du tireur avec un adhésif adapté.

Lorsque le tireur utilise une tenue spéciale telle qu'une combinaison de tir, les IMU sont préférablement intégrées à la tenue qui sert alors comme tenue de mesure du mouvement.

Les IMU peuvent également être portées en bracelet, être intégrées à des gants ou à un gilet, etc.

En résumé, les IMU selon l'invention peuvent être portées à même la peau ou sur un vêtement (sous-vêtement, pantalon, chaussure, veste, combinaison, etc.), en étant amovibles ou intégrées, cachées ou apparentes, fixes ou repositionnables, au moyen de bandes velcro, d'adhésifs, d'épinglettes, ou d'une combinaison de ces éléments.

En outre, des IMU ainsi que des boitiers d'interface peuvent également être installés sur un dispositif d'appui supportant l'arme tel qu'un appui fixe de type tripode ou un appui mobile de type canne (monopode).

Le système d'analyse du mouvement, de par ses principaux composants ci-dessus décrits, permet de mesurer les mouvements de différentes parties du corps du tireur et de l'arme lors d'un tir, de traiter les données mesurées, en temps réel ou en temps différé, et de présenter ces données de façon exploitable afin de permettre leur analyse qualitative et/ou quantitative selon le besoin de chaque utilisateur (moniteur, amateur, entraineur, sportif professionnel, scientifique, etc.).

La présentation des données issues des IMU et des boitiers d'interface consiste en un affichage de ces données sous forme de graphiques donnant l'évolution dans le temps des variables cinématiques mesurées et traitées. Pour chaque IMU, le calculateur peut afficher les coordonnées de la position, les composantes du vecteur vitesse linéaire, les composantes du vecteur accélération linéaire, les angles d'attitude et les composantes du pseudovecteur vitesse angulaire. Par conséquent, le tireur a accès à toutes ces variables cinématiques pour chaque point mobile de son corps ou de son arme au niveau duquel une IMU a été placée. Le tireur peut ainsi choisir les points mobiles, sur son corps ou sur son arme, dont il veut connaitre et analyser le mouvement lors du tir. L'analyse du mouvement peut être affinée soit, de façon globale en multipliant le nombre d'IMU, soit de façon locale en concentrant plus d'IMU sur une zone déterminée du corps.

De plus, le système d'analyse du mouvement, par le biais du calculateur 30, est apte à réaliser des analyses de corrélation entre différentes variables cinématiques de différentes IMU pour comprendre les relations entre les mouvements des différentes parties du corps et de l'arme, et plus particulièrement les relations entre les mouvements du corps et les mouvements induits sur l'arme. Le système d'analyse du mouvement selon l'invention est donc capable de déterminer la ou les causes d'un mouvement non contrôlé ou involontaire de l'arme lors du tir, d'indiquer une mauvaise position du tireur, de déterminer si le mouvement d'une partie du corps est excessif ou incorrect, etc.

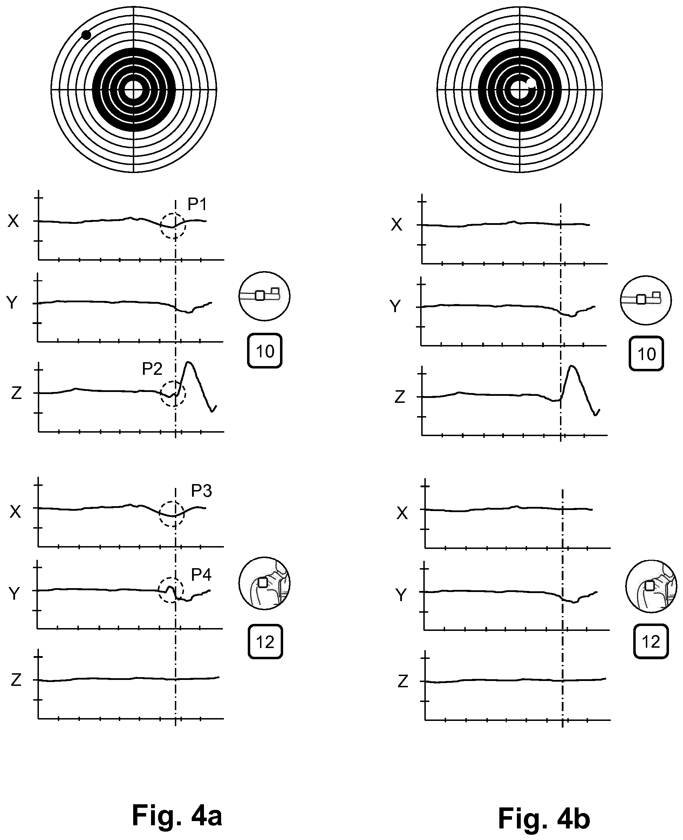

Les figures 4a et 4b illustrent des exemples de graphiques obtenus pour deux tirs, un premier tir avec un impact (rond noir) éloigné du centre de la cible en figure 4a et un deuxième tir avec un impact (rond blanc) proche du centre de la cible en figure 4b.

Chacune des figures 4a et 4b contient les graphiques des coordonnées de position X, Y et Z issues de deux IMU différentes, en l'occurrence des IMU 10 et 12 représentées sur la figure 1. Chaque graphique montre l'évolution temporelle de la coordonnée de position correspondante au cours de toutes les phases du tir, à savoir de la visée au départ du projectile.

Dans ce cas de figure précis, l'éloignement de l'impact du centre de la cible lors du premier tir peut être expliqué, dans un premier temps, par de légères variations observées sur les coordonnées X et Z de l'IMU 10, placée au niveau de l'extrémité du canon, entre le premier tir et le deuxième tir. En effet, ces variations, ou perturbations, entourées en trait interrompu, correspondent à des mouvements parasites au niveau du canon qui ne devraient pas se produire lors d'un tir bien exécuté. L'effet direct des perturbations initiales non contrôlées est la déviation du tir qui se manifeste par un impact dont l'éloignement par rapport au centre de la cible n'est pas contrôlé.

Sur la figure 4a et en ce qui concerne l'IMU 10, on observe une baisse de X juste avant le départ du projectile, départ matérialisé par une droite dont la position est déterminée par un front montant significatif d'une certaine coordonnée ou par tout autre variation brusque d'une autre variable cinématique mesurée. En référence au système d'axes de la figure 1, cette perturbation P1 traduit un léger décalage de l'extrémité du canon vers la gauche, d'où la position de l'impact sur la cible.

Une interprétation analogue peut être faite à la lecture de la courbe de la coordonnée Z de la même IMU. On observe une impulsion P2 de très faible amplitude juste avant le départ du projectile. Il s'agit en l'espèce d'un mouvement du canon en contradiction avec le mouvement de référence que doit suivre le canon juste avant le lâcher (appui sur la queue de détente). Généralement, le tireur doit viser légèrement au-dessus du point visé pour laisser retomber délicatement le canon avant de tirer au moment de correspondance entre le point visé et l'extrémité du canon (le guidon), sur la ligne de visée. Cette phase, très critique, dépend fortement du contrôle de la respiration et présente une grande sensibilité à toute perturbation extérieure. La précision longitudinale (en hauteur) du tir est directement liée à cette phase de visée. Le graphique équivalent sur la figure 4b illustre un exemple d'une bonne exécution de cette phase.

Dans un second temps, une explication des perturbations observées sur les courbes X et Z de l'IMU 10 est possible grâce à la lecture de l'ensemble de courbes X, Y et Z issu de l'IMU 12, positionnée au niveau de l'épaule d'appui de la crosse.

On rappelle que les figures 4a et 4b ne correspondent pas à des mesures réelles mais représentent simplement un scénario imagé illustrant un exemple d'analyses possibles dans le cadre de l'invention.

Ainsi, les perturbations P1 et P2 du mouvement du canon peuvent par exemple être imputés à un léger mouvement parasite de l'épaule dans le plan (X, Y), identifié par les perturbations P3 et P4. De telles perturbations sont par exemple absentes dans le cas d'un tir « réussi » comme représenté sur la figure 4b.

Le tireur peut donc utiliser cette analyse graphique pour essayer d'améliorer la stabilité de son épaule d'appui en vue d'obtenir de meilleurs résultats.

Dans cette logique d'analyse de causalité entre des perturbations mesurées dans le mouvement de l'arme et les mouvements du corps du tireur, le calculateur 30 fournit, en plus des mesures compilées de toutes les IMU, des analyses de corrélation entre les différentes courbes issues desdites mesures. Les corrélations sont principalement calculées entre les composantes de même nature sur différentes IMU. Ainsi, les corrélations entre chaque composante de position d'une IMU et les composantes de position des autres IMU sont calculées pour analyser tout lien possible entre le mouvement d'une IMU donnée et le reste des IMU. De préférence, la corrélation est calculée entre les IMU placées sur l'arme et les IMU placées sur le corps du tireur afin de comprendre la répercussion des mouvements impromptus du corps du tireur sur l'arme, et par là-même leur incidence quant à la précision des tirs.

Le système d'analyse du mouvement tel que décrit permet la mise en œuvre d'un procédé d'analyse du mouvement, appliqué au tir sportif et assimilé, comprenant principalement :
- Une étape de mesure du mouvement par un ensemble d'IMU 10 à 17 placées sur l'arme et sur le tireur lors d'une séquence de tir ;
- Une étape de transmission des données de mesure à des boitiers d'interface 20 à 22, chacun desdits boitiers étant relié à une ou plusieurs IMU ;
- Une étape de prétraitement des données de mesure par les boitiers d'interface ;
- Une étape de transmission des données de mesure brutes et prétraitées à un calculateur 30 ;
- Une étape de traitement des données reçues par le calculateur, comprenant par exemple des calculs de corrélation ; et
- Une étape d'affichage des résultats du traitement sous forme de graphiques.

L'étape de mesure du mouvement consiste en la mesure, directe ou indirecte, par chaque IMU, des variables cinématiques instantanées (accélération et vitesse linéaires, position, vitesse angulaire, angles d'attitude), correspondant au mouvement du point, du corps du tireur ou de l'arme, au niveau duquel ladite IMU est placée.

L'étape de transmission des données des IMU aux boitiers d'interface permet à chaque boitier d'interface de récupérer les données de mesure issues de l'IMU ou des IMU qui lui sont reliées. Les liaisons entre les IMU et les boitiers d'interface sont filaires et permettent, entre autres, d'alimenter électriquement lesdites IMU lorsqu'elles ne sont pas pourvues d'une alimentation autonome.

L'étape de prétraitement dans les boitiers d'interface est réalisée par le biais de programmes informatiques installés, ou importés, dans lesdits boitiers et qui permettent par exemple de normaliser les mesures des IMU selon une unité physique donnée.

L'étape de transmission des données prétraitées, des boitiers d'interface au calculateur central, peut se faire par une liaison filaire ou, de préférence, par une liaison sans-fil de type radio pour ne pas gêner le tireur. De plus, cette transmission peut être effectuée en temps réel ou en temps différé selon le besoin de chaque utilisateur.

L'étape de traitement des données dans le calculateur central repose principalement sur des analyses de probabilité et de statistique sur les données disponibles. Une séquence de tir est un phénomène composé, au moins, du mouvement du tireur, contrôlé ou non, et du mouvement de l'arme, causé par le mouvement du tireur ou non. Les variables cinématiques attachées à ces deux mouvements complexes constituent des variables aléatoires. Ainsi, différents traitements statistiques peuvent être effectués sur les ensembles de variables cinématiques mesurées. Par exemple, et comme soulevé supra, un calcul de corrélation entre différentes variables issues de différentes IMU est pertinent dans la mesure où il permet de chercher les causes réelles, ou tout du moins apparentes, du mouvement de l'arme lors de la séquence de tir. L'analyse statistique des données est par exemple basée sur la loi du χ², ou toute autre loi similaire et adaptée aux ensembles de données à disposition.

Par exemple, lorsqu'un modèle mathématique d'une séquence de tir de référence existe ou peut être établi, il est incorporé dans le programme de traitement du calculateur central afin de permettre une comparaison des mesures réelles des IMU avec ce modèle de référence, par application de la méthode des moindres carrés ou de toute autre méthode statistique adéquate.

L'étape d'affichage des résultats permet de rendre accessibles à la fois les analyses des mesures des IMU que les mesures elles-mêmes pour que le tireur ou son conseiller puisse tirer ses propres conclusions. Cet affichage comporte principalement des graphiques tant des variables cinématiques que des fonctions de corrélation et autres fonctions statistiques. En outre, l'affichage comporte des données sous forme de tableaux déroulants, classées par IMU par exemple. Les données affichées peuvent également être accessibles de différentes manières telles que des groupements de courbes issues de la même IMU, de variables de mêmes dimensions, des historiques de mesures, etc.

Le procédé d'analyse du mouvement selon l'invention peut en outre comporter des étapes subsidiaires de stockage des données dans le calculateur, d'envoi des données sur un serveur centralisé de type « cloud » regroupant les résultats d'une communauté de tireurs sportifs par exemple, de traitement par des algorithmes d'intelligence artificielle tels que des analyses prédictives pour indiquer au tireur les corrections nécessaires lors du tir, etc.

## Revendications

1. Procédé d'analyse du mouvement d'une personne (100) et d'un dispositif (200, 201) tenu par ladite personne au moyen d'une pluralité de capteurs de mouvement (10, 11, 12, 13, 14, 15, 16, 17) fixés sur la personne et sur le dispositif, **caractérisé en ce qu'**il comprend des étapes de :
- mesure de variables cinématiques instantanées par les capteurs de mouvement,
- transmission de données de mesure à plusieurs boitiers électroniques d'interface (20, 21, 22) reliés chacun à plusieurs capteurs de mouvement, chaque boitier d'interface étant configuré pour programmer, régler, calibrer et alimenter électriquement les capteurs de mouvement auxquels il est relié,
- prétraitement des données transmises dans ledit boitier,
- transmission des données prétraitées à un calculateur central (30),
- traitement des données reçue par le calculateur central avec au moins un calcul de corrélation statistique entre le mouvement d'au moins un capteur de mouvement fixé au dispositif et le mouvement d'au moins un capteur de mouvement porté par la personne,
- affichage de résultats dudit traitement.

2. Procédé d'analyse du mouvement selon la revendication 1, dans lequel l'étape de prétraitement dans chaque boitier électronique d'interface (20, 21, 22) comprend une normalisation des mesures, issues des capteurs de mouvements auxquels ledit boitier est relié, selon des unités physiques déterminées.

3. Procédé d'analyse du mouvement selon la revendication 1 ou la revendication 2, dans lequel l'étape de transmission des données prétraitées au calculateur central (30) est effectuée par une liaison filaire ou sans-fil.

4. Procédé d'analyse du mouvement selon l'une quelconque des revendications précédentes, dans lequel l'étape de traitement des données dans le calculateur central (30) comprend des calculs statistiques selon la loi du χ².

5. Procédé d'analyse du mouvement selon l'une quelconque des revendications précédentes, dans lequel l'étape de traitement des données dans le calculateur central (30) comprend un calcul de corrélation entre le mouvement d'au moins un capteur de mouvement fixé au dispositif (200, 201) et le mouvement d'au moins un capteur de mouvement porté par la personne (100).

6. Procédé d'analyse du mouvement selon l'une quelconque des revendications précédentes, dans lequel l'étape d'affichage de résultats du traitement réalisé dans le calculateur central (30) consiste en l'affichage d'un ou plusieurs éléments parmi des graphiques, des courbes temporelles, des tableaux de données et des messages textuels.

7. Procédé d'analyse du mouvement selon l'une quelconque des revendications précédentes, dans lequel la personne (100) est un tireur sportif et le dispositif (200, 201) est une arme avec ou sans support de tir.

8. Système d'analyse du mouvement pour la mise en œuvre d'un procédé selon l'une quelconque des revendications précédentes, comprenant des capteurs de mouvement (10, 11, 12, 13, 14, 15, 16, 17), au moins un boitier électronique d'interface (20, 21, 22) et un calculateur central (30).

9. Système d'analyse du mouvement selon la revendication 8, dans lequel les capteurs de mouvement, le boitier électronique d'interface et le calculateur central sont respectivement des unités de mesure inertielles, une carte électronique programmable de type Arduino et un ordinateur.

10. Système d'analyse du mouvement selon la revendication 8 ou la revendication 9, dans lequel chaque capteur de mouvement est fixé sur le dispositif (200, 201) et/ou sur la personne (100) par des moyens repositionnables tels que des adhésifs, des bandes auto agrippantes ou des épingles.

## Patentansprüche

1. Verfahren zur Analyse der Bewegung einer Person (100) und eines von dieser Person gehaltenen Geräts (200, 201) mittels einer Vielzahl von Bewegungssensoren (10, 11, 12, 13, 14, 15, 16, 17), die an der Person und an dem Gerät befestigt sind, **dadurch gekennzeichnet, dass** es die folgenden Schritte umfasst:
- Messen von momentanen kinematischen Variablen durch die Bewegungssensoren,
- Übertragung von Messdaten an mehrere elektronische Schnittstellenboxen (20, 21, 22), von denen jede mit mehreren Bewegungssensoren verbunden ist, wobei jede Schnittstellenbox so konfiguriert ist, dass sie die mit ihr verbundenen Bewegungssensoren programmiert, einstellt, kalibriert und elektrisch versorgt,
- Vorverarbeitung der übertragenen Daten in der jeweiligen Box,
- Übertragung der vorverarbeiteten Daten an eine zentrale Recheneinheit (30),
- Verarbeitung der von der zentralen Recheneinheit empfangenen Daten mit mindestens einer statistischen Korrelationsberechnung zwischen der Bewegung von mindestens einem an dem Gerät befestigten Bewegungssensor und der Bewegung von mindestens einem von der Person getragenen Bewegungssensor,
- Anzeige der Ergebnisse der Verarbeitung.

2. Verfahren zur Analyse der Bewegung nach Anspruch 1, wobei der Schritt der Vorverarbeitung in jeder elektronischen Schnittstellenbox (20, 21, 22) eine Normalisierung der von den mit der jeweiligen Box verbundenen Bewegungssensoren erfassten Messwerte gemäß vorgegebenen physikalischen Einheiten umfasst.

3. Verfahren zur Analyse der Bewegung nach Anspruch 1 oder 2, wobei die Übertragung der vorverarbeiteten Daten an die zentrale Recheneinheit (30) über eine drahtgebundene oder drahtlose Verbindung erfolgt.

4. Verfahren zur Analyse der Bewegung nach einem der vorhergehenden Ansprüche, wobei die Datenverarbeitung in der zentralen Recheneinheit (30) statistische Berechnungen gemäß der χ²-Verteilung umfasst.

5. Verfahren zur Analyse der Bewegung nach einem der vorhergehenden Ansprüche, wobei die Datenverarbeitung in der zentralen Recheneinheit (30) eine Korrelationsberechnung zwischen der Bewegung von mindestens einem an dem Gerät (200, 201) befestigten Bewegungssensor und der Bewegung von mindestens einem von der Person (100) getragenen Bewegungssensor umfasst.

6. Verfahren zur Analyse der Bewegung nach einem der vorhergehenden Ansprüche, wobei die Anzeige der Ergebnisse der in der zentralen Recheneinheit (30) durchgeführten Verarbeitung in der Anzeige eines oder mehrerer Elemente unter Grafiken, zeitabhängigen Kurven, Datentabellen und Textnachrichten besteht.

7. Verfahren zur Analyse der Bewegung nach einem der vorhergehenden Ansprüche, wobei die Person (100) ein Sportschütze ist und das Gerät (200, 201) eine Waffe mit oder ohne Schießunterstützung ist.

8. System zur Analyse der Bewegung zur Durchführung eines Verfahrens nach einem der vorhergehenden Ansprüche, umfassend Bewegungssensoren (10, 11, 12, 13, 14, 15, 16, 17), mindestens eine elektronische Schnittstellenbox (20, 21, 22) und eine zentrale Recheneinheit (30).

9. System zur Analyse der Bewegung nach Anspruch 8, wobei die Bewegungssensoren, die elektronische Schnittstellenbox und die zentrale Recheneinheit jeweils Inertialsensoreinheiten, eine programmierbare elektronische Platine vom Typ Arduino und ein Computer sind.

10. System zur Analyse der Bewegung nach Anspruch 8 oder 9, wobei jeder Bewegungssensor mittels repositionierbarer Mittel wie Klebstoffen, Klettbändern oder Nadeln an dem Gerät (200, 201) und/oder an der Person (100) befestigt ist.

## Claims

1. A method for analyzing the movement of a person (100) and of a device (200, 201) held by said person by means of a plurality of motion sensors (10, 11, 12, 13, 14, 15, 16, 17) attached to the person and to the device, **characterized in that** it comprises the steps of:
- measuring instantaneous kinematic variables by the motion sensors,
- transmitting measurement data to several electronic interface boxes (20, 21, 22) each connected to several motion sensors, each interface box being configured to program, adjust, calibrate and electrically power the motion sensors to which it is connected,
- preprocessing the transmitted data within said box,
- transmitting the preprocessed data to a central processing unit (30),
- processing the data received by the central processing unit with at least one statistical correlation computation between the movement of at least one motion sensor attached to the device and the movement of at least one motion sensor worn by the person,
- displaying results of said processing.

2. **The** method for analyzing the movement according to claim 1, wherein the preprocessing step in each electronic interface box (20, 21, 22) comprises a normalization of the measurements from the motion sensors to which said box is connected, according to predetermined physical units.

3. **The** method for analyzing the movement according to claim 1 or claim 2, wherein the step of transmitting the preprocessed data to the central processing unit (30) is carried out via a wired or wireless connection.

4. **The** method for analyzing the movement according to any one of the preceding claims, wherein the step of processing the data in the central processing unit (30) comprises statistical computations according to the χ² distribution.

5. **The** method for analyzing the movement according to any one of the preceding claims, wherein the step of processing the data in the central processing unit (30) comprises a correlation computation between the movement of at least one motion sensor attached to the device (200, 201) and the movement of at least one motion sensor worn by the person (100).

6. **The** method for analyzing the movement according to any one of the preceding claims, wherein the step of displaying results of the processing performed in the central processing unit (30) consists in displaying one or more items among graphs, time-based curves, data tables, and textual messages.

7. The method for analyzing the movement according to any one of the preceding claims, wherein the person (100) is a sport shooter and the device (200, 201) is a weapon with or without a shooting support.

8. A system for analyzing the movement for implementing a method according to any one of the preceding claims, comprising motion sensors (10, 11, 12, 13, 14, 15, 16, 17), at least one electronic interface box (20, 21, 22), and a central processing unit (30).

9. The system for analyzing the movement according to claim 8, wherein the motion sensors, the electronic interface box and the central processing unit are respectively inertial measurement units, a programmable electronic board of the Arduino type, and a computer.

10. **The** system for analyzing the movement according to claim 8 or claim 9, wherein each motion sensor is attached to the device (200, 201) and/or to the person (100) by repositionable means such as adhesives, hook-and-loop fasteners, or pins.
